(19) Europäisches Patentamt
European Patent Office
Office européen des brevets

(11) **EP 2 996 421 B1**

(12) **EUROPEAN PATENT SPECIFICATION**

(45) Date of publication and mention
of the grant of the patent:
**14.06.2017 Bulletin 2017/24**

(51) Int Cl.:
***H04W 72/12*** *(2009.01)*

(21) Application number: **14306414.5**

(22) Date of filing: **15.09.2014**

(54) **METHOD, EQUIPMENT AND COMPUTER-READABLE MEDIUM FOR ALLOCATING RESOURCES**

VERFAHREN, AUSRÜSTUNG UND COMPUTERLESBARES MEDIUM ZUR ZUWEISUNG VON RESSOURCEN

PROCÉDÉ, ÉQUIPEMENT ET SUPPORT LISIBLE PAR ORDINATEUR POUR L'ALLOCATION DE RESSOURCES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.03.2016 Bulletin 2016/11**

(73) Proprietor: **ALCATEL LUCENT**
**92100 Boulogne-Billancourt (FR)**

(72) Inventor: **Roullet, Laurent**
**91620 Nozay (FR)**

(74) Representative: **Berthier, Karine et al**
**Alcatel-Lucent International**
**148/152, route de la Reine**
**92100 Boulogne-Billancourt (FR)**

(56) References cited:
**US-A1- 2011 116 460    US-A1- 2012 163 208**

• **BONALD T: "FLOW-LEVEL PERFORMANCE ANALYSIS OF SOME OPPORTUNISTIC SCHEDULING ALGORITMS", EUROPEAN TRANSACTIONS ON TELECOMMUNICATIONS, WILEY & SONS, CHICHESTER, GB, vol. 16, no. 1, 1 January 2005 (2005-01-01), pages 65-75, XP001225777, ISSN: 1124-318X, DOI: 10.1002/ETT.1032**

## Description

FIELD OF INVENTION

The present subject matter relates to the allocation of resources within a wireless network and more precisely but not exclusively to the allocation of resources to different base stations of a cellular network.

BACKGROUND

The present subject matter is drive by the continuous increase of wireless access demand. Within a cellular network there is an increase density of user device in some area more precisely but not exclusively in urban area. There are three solutions suitable for facing this increased demand:

The first non technical solution is to increase the spectrum dedicated to the network facing scared resource.

The second solution is a better spectrum reuse via network densification by means of small cells deployment; the issue of densification is the creation of strong interferences that must be controlled via interference mitigation / avoidance (e.g. using Inter-Cell Interference Coordination (ICIC) or enhanced Inter-Cell Interference Coordination (eICIC)).

The third solution consists in, instead of avoiding the interferences, trying to reuse the interferences to increase signal robustness, therefore enabling the full reuse of the same resource by different terminals. This is the general objective of the Coordinated Multipoint (CoMP) techniques that have been standardized in 3GPP release 11 and following.

The issue with the third solution is the cost in terms of front hauling capacity between the different elements of the cellular network. Therefore the second solution is the privileged approach for the "bandwidth restricted" network configurations. Therefore the present subject matter will be focus on the second solution where the coordinator has to relied on Channel State Information (CSI) and other information (such as buffer states, connection priorities, etc...) coming from various nodes in order to allocate the resources optimally.

It is also know the patent applications references US2012/163208 and US2011/116460 and the publication of Bonald-T "Flow-level performance analysis of some opportunistic scheduling algorithms" published within European transactions on telecommunications.

SUMMARY

This summary is provided to introduce concepts related to the allocation of resources to different base stations of a wireless network. The invention relates to a method for allocating resources to user equipments connected to a base station of a cellular network (claim 1), and further claims an apparatus (claim 9), and a computer program (claim 10). Preferred embodiments are captured in the dependent claims 2 to 8.

In one implementation, a method is described. A method is configured to allocate resources to user equipments connected to a base station of a cellular network, the resources are used to establish connection between the base station and the user equipments, the resources are associated to different resource areas and each resource areas has a predetermined number of resources, the method comprises; an initial step of associating to each user equipment an initial capacity in bits per second of its communication service channel to the cellular network. The method also comprises the following iterative steps; a first step of determining a user equipment with the lowest capacity, and a second step of determining a resource area within which a spectral efficiency of the user equipment is optimal, and a step of allocating a certain number of resources to the user equipment within the resource area, and a step of updating the capacities associated to the different user equipment.

In another implementation an equipment or network device is described. This equipment is dedicated to allocation of resources to user equipments connected to a base station of a cellular network, the resources are used to establish connection between the base station and the user equipments, the resources are associated to different resource areas and each resource areas has a predetermined number of resources, the equipment comprises; an initial module of associating to each user equipment an initial capacity in bits per second of its communication service channel to the cellular network. The systems also comprises a first module of determining a user equipment with the lowest capacity, and a second module of determining a resource area within which a spectral efficiency of the user equipment is optimal, and a module of allocating a certain number of resources to the user equipment within the resource area, and a module of updating the capacities associated to the different user equipment.

In another implementation a computer-readable medium is described. The computer-readable medium having embodied thereon a computer program configured to realize the allocation of resources to user equipments connected to a base station of a cellular network, the resources are used to establish connection between the base station and the user equipments, the resources are associated to different resource areas and each resource areas has a predetermined number of resources, the method comprises; an initial step of associating to each user equipment an initial capacity, in bits per second of its communication service channel to the cellular network. The method also comprises the following iterative steps; a first step of determining a user equipment with the lowest capacity, and a second step of determining a resource area within which a spectral efficiency of the user equipment is optimal, and a step of allocating a certain number of resources to the user equipment within the resource area, and a step of updating the capacities associated to the different user equipment.

BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Figure 1 illustrates an embodiment of the method object of the present subject matter.

Figure 2 illustrates the implementation of the method of the present subject matter within a cellular system.

Figure 3 illustrates an embodiment of the method used to collect the information's needed by the allocation method.

Figure 4.a and 4.b present two embodiments of the method object of the present subject matter.

Figure 5 presents an embodiment of the method object of the present subject matter.

Figure 6 presents an embodiment of the equipment object of the present subject matter.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

DESCRIPTION OF EMBODIMENTS

In an embodiment of the present subject matter the method for allocation resources faces number of challenges:

- This method needs to be flexible, to support various Key Performance Indicators (KPI).
- This method needs to be scalable, to support a possibly rather large number of users.
- This method needs to be able to adapt to various parameters and variables (power, frequency, time, spatial diversity...).
- This method needs to converge almost to the global optimum.

In an embodiment of the present subject matter the method tends to avoid brute force approaches and favors iterative approaches. In this embodiment the method uses an innovative iterative approach based on game theory that enables to scale with the number of nodes linearly while offering sufficient convergence capabilities (local, global...). The method of this embodiment has been successfully implemented in a distributed context.

This embodiment is also called the Coordinated Scheduling. This approach assumes that all realtime Layer 1 Channel State Information (CSI) and Layer 2 measurements get collected to the central processing unit where an omniscient scheduler will decide the scheduling decisions on behalf of the remote unit that has only to perform the Layer 1 processing. This approach is very attractive since it can exhibit the best possible performance, better than a fully distributed approach and without the front-hauling cost of a fully centralized approach.

In an embodiment of the present subject matter the method implements the possibility to forecast the scheduling done by each node. This embodiment is dedicated to a central option and is able to adapt to multiple ways of considering scheduling especially with the emergence of Coordinated Scheduling/Coordinated Beamforming (CS/CB). In another word this embodiment presents an innovative scheduling algorithm - called the "virtual scheduling" since it is not expected to represent the "real" local scheduling but to be a good approximation of it.

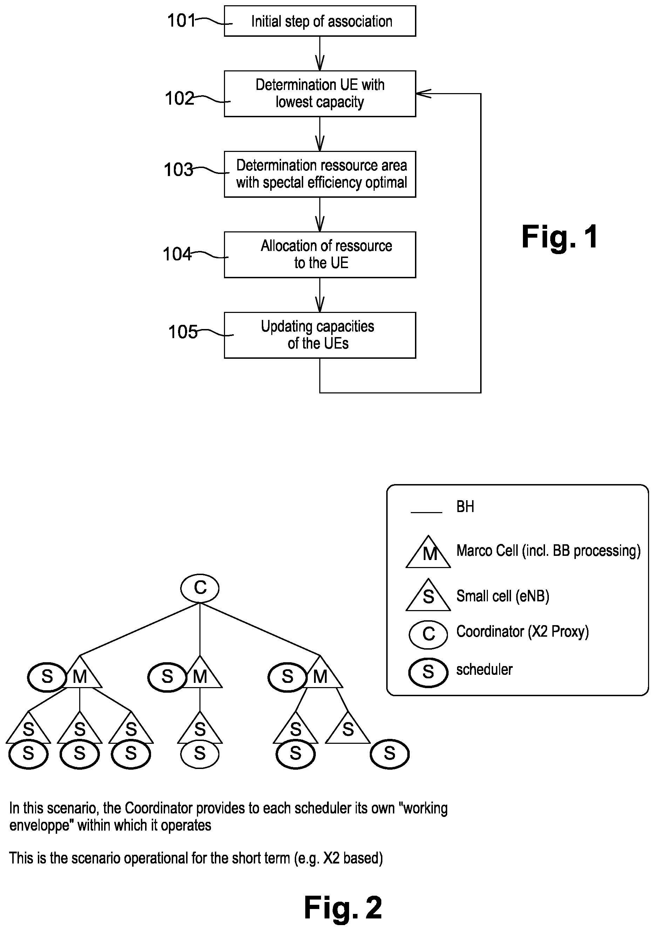

The figure 1 presents an embodiment of the present subject matter. This embodiment is a method for allocating resources, associated to at least one base station of a cellular network. The resources are used to establish connection between the base stations and several user equipments connected to these base stations. The resources are associated to different resource areas. Each resource area has a predetermined number of resources. The method comprises an initial step 101 of associating to each user equipment an initial capacity, in bits per second of its communication service channel to the cellular network. After that the method also comprises the following iterative steps;

a first step 102 of determining a user equipment with the lowest capacity, and

a second step 103 of determining a resource area within which a spectral efficiency of the user equipment is optimal, and

a step 104 of allocating a certain number of resources to the user equipment within the resource area, and

a step 105 of updating the capacities associated to the different user equipment.

In an embodiment the iterative steps are realized until the number of allocated resources, associated to each resource area, reaches the predetermined number of resources. In another words, the method is realized until there is no more resources to allocate.

In an embodiment the initial step 101 is configured to associate a null capacity to each user equipment. In another embodiment, the algorithm starts with a pre allocated capacity to some user equipments if some guaranteed capacity are granted (such as VoIP).

In an embodiment the second determination step 103 is configured to determine a resource area within which a spectral efficiency of the user equipment is optimal and in which there is still resource to allocate. In another words we only consider resource area with available resource to allocate.

In an embodiment the first determination step 102 is configured to determine a user equipment with the lowest capacity and with a resource area within which the spectral efficiency is optimal that still contains available resources. In another words we only consider user equipment that need resources in a resource area which still contains resources to allocate.

In an embodiment the step 104 of updating the capacities associated to the different user equipment is configured to use the following formula:

$$C_i = \sum_{j=1}^{N} R_{i,j} E_{i,j}$$

wherein $C_i$ is the capacity associated to the user equipment $i$, $N$ is the number of resource area, $R_{i,j}$ is the resource associated to the user equipment $i$ within the resource area $j$, $E_{i,j}$ is the spectral efficiency of the user equipment $i$ within the resource area $j$.

In an embodiment the step 104 of updating the capacities associated to the different user equipment is configured to use the following formula:

$$C_i = \sum_{j=1}^{N} R_{i,j} E_{i,j} + \frac{Y}{M}$$

wherein $C_i$ is the capacity associated to the user equipment $i$, $N$ is the number of resource area, $R_{i,j}$ is the resource associated to the user equipment $i$ within the resource area $j$, $E_{i,j}$ is the spectral efficiency of the user equipment $i$ within the resource area $j$, the $M$ is the total number of user equipment connected to the base station, $Y$ is the total number of resources that are currently available.

In an embodiment the second step of determining a resource area is configured to use the following formula to determine the spectral efficiency of the user equipment:

$$C = B \log_2 \left( 1 + \frac{S}{N + I} \right)$$

where:

- C is the channel capacity in bits per second;
- B is the bandwidth of the channel in hertz
- S is the average received useful signal power over the bandwidth measured in watts;
- N is the average noise power over the bandwidth, measured in watts;
- I is the average received interfering signal power over the bandwidth measured in watts;
- And S/(N+I) is the signal-to-noise+interferer ratio (SINR) expressed as a linear power ratio (not as logarithmic decibels).

The useful and interfering signals are derived from the knowledge of the transmitter powers, their average attenuations and the knowledge of their transmission patterns (if they transmit or not in the corresponding resource area).

In an embodiment the resources areas are for example: a group of time sub frames, or a group of frequency Ressource Blocks, or a group of MIMO transmission patterns or any combination of those elements.

In another words in theses embodiments when the backhauling has limited capacity, the best solution is to use a coordinator to control the individual distributed Radio Access Networks (RANs) resources. Depending on the actual capabilities of the backhauling, the resources that fall under the control of the controller will differ as it could be the user attachment (via the Cell Individual Offset or CIO), the time diversity (via Almost Blank Sub frames patterns or ABS patterns), the frequency (ICIC) and even the spatial diversity. In this scenario, all the processing dedicated to the PHY layer and MAC layer is performed locally, only main parameters are given by the coordinator to each scheduler. This general concept is presented figure 2.

The controller is therefore in charge of performing global decisions (thanks to its global knowledge of the network status) but with a lower frequency than the local scheduler. Therefore the local scheduler can react quicker to local changes but within a plurality of resources given by the coordinator. It becomes critical for the coordinator to be able to forecast with good accuracy the performance of the local schedulers in order to be able to allocate resources in a meaningful way. Usually the key performance indicators are the capacity expected from the allocation in the next period of allocation. It is expected, due to the real-time reactivity of the local scheduler, that the actual performance will exceed the forecasted performance.

In an embodiment the following simplification are used:

Users equipment are grouped by the access nodes according to some "local criteria" usually referred to as "spectral efficiency proximity"; an example of local criteria is the localization of the users in cell edge or cell center (hence splitting in 2 groups); in cell edge several choices are possible depending on the major interferers (one or more major interferers could exist); in one group the users will have same major interferers combination and therefore similar spectrum efficiency;

resources are grouped in resource areas to limit the number of cases; resources can be various (time slots, frequency slots, etc...);

there is a local spectrum efficiency associated to each group of user and resource area; this spectrum efficiency can be considered as static (depending e.g. on the interference patterns) or can be changed dynamically.

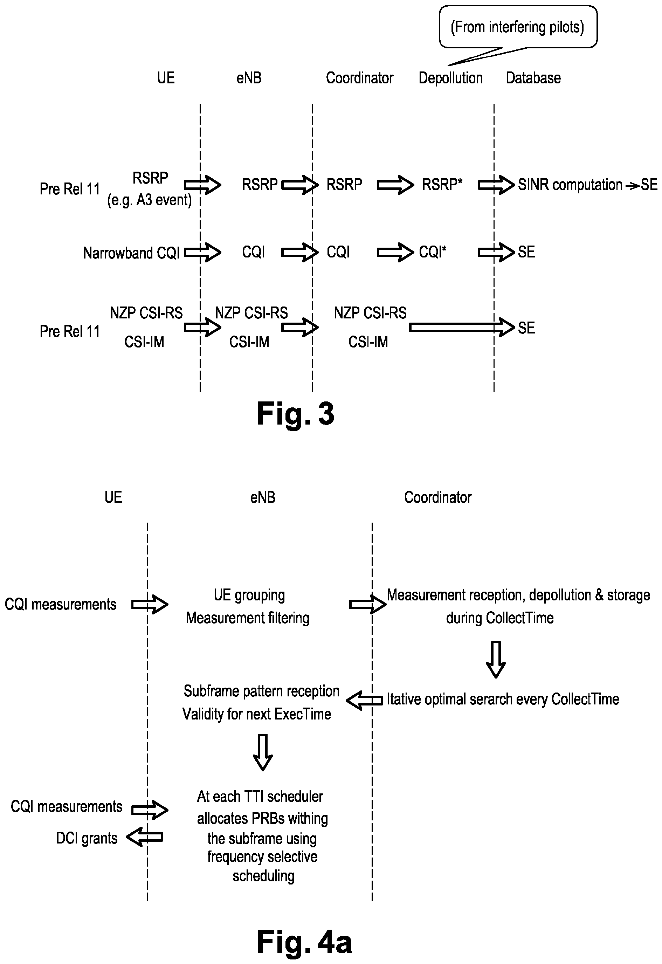

The table, used to handle the resources allocation, is populated by receiving data from the user equipment, then the base stations or eNodeBs then the coordinator as describes within the figure 3.

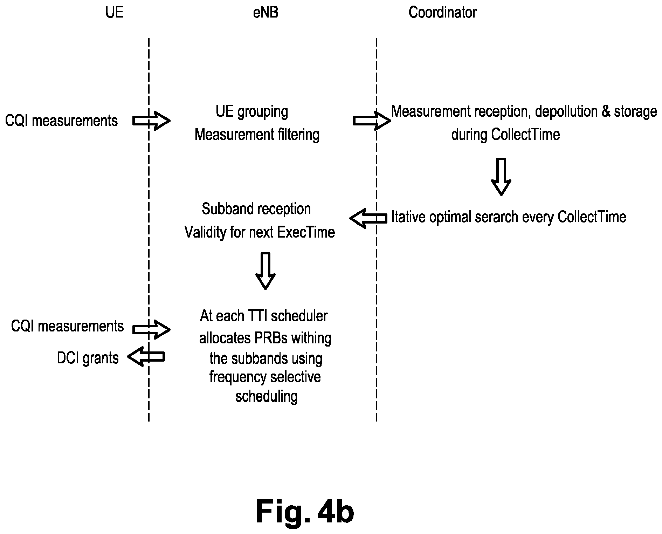

Once the table is populated, the coordinator can compute the best choice of resource distribution and send the result back to the eNodeBs where the local scheduler will abide by the choice (e.g. restrict the usage of some specific resources in time or subbands). The figure 4.a and 4.b present respectively the case of time diversity resources and the case of frequency diversity resources.

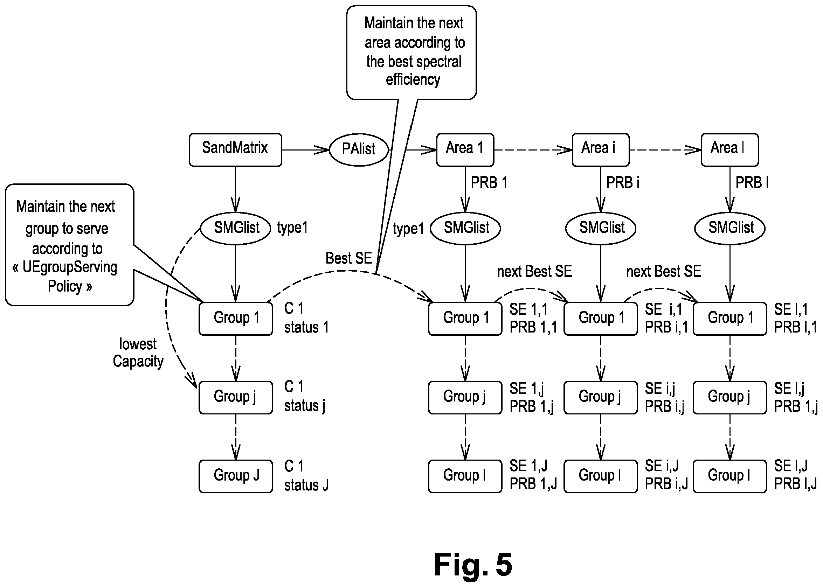

The figure 5 is another representation of the method object of the present subject matter. The principle is to distribute the resources available in each resources area to user equipments or group of user equipments until those resources are exhausted in all the resources areas. In order to determine to which user equipment of group of user equipments allocate the resource the method considers here a "virtual capacity" that is the capacity of a group of user equipments or the capacity of a user equipment if the remaining resources were distributed to this group of user equipments or this user equipment. This avoids the main default of the state of the art policies, especially the state of the art policy that selects the currently best group of user equipments or user equipment with the risk of exhausting capacity of group of user equipments or user equipments with low spectrum efficiencies (these group of user equipments or user equipments should be on the contrary more served than the well allocated group of user equipments or user equipments).

In this embodiment the policy can place the allocation in a state very near the proportional fairness; it is not a proportional fairness per se since the same capacity is sought and we call it the "absolute fairness" (it is exactly same capacity for all UEgroups) therefore an additional step is required in case proportional fairness is the criteria (we call it the "swapping stage"). The swapping stage takes relay where the "absolute fairness" ends. The objective of the swapping stage is to increase the proportional fairness by swapping resources between those who have too much and those who do not have enough. For achieving this, an iterative approach is pursued over all resource areas: for each resource area we select the user having the lowest SE and the one having the greatest and we exchange one unit of resource and check how evolve the logartithm of the capacity; we continue until there is no gain in swapping.

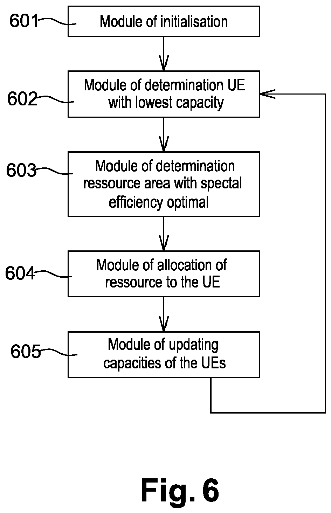

The figures 6 presents a equipment used to allocate resources within a cellular network. This equipment comprises;

an initial module 601 of associating to each user equipment an initial capacity, in bits per second of its communication service channel to the cellular network,

a first module 602 of determining a user equipment with the lowest capacity, and

a second module 603 of determining a resource area within which a spectral efficiency of the user equipment is optimal, and

a module 604 of allocating a certain number of resources to the user equipment within the resource area, and

a module 605 of updating the capacities associated to the different user equipment.

In an embodiment the different modules are realized using one or more processor(s), I/O interface(s), and a memory coupled to the processor(s). The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

In an embodiment of the subject matter, the method for estimating a communication service described figure 1 can be performed by programmed computers.

The method comprises an initial step (101) of associating to each user equipment an initial capacity in bits per second of its communication service channel to the cellular network.

The method also comprises the following iterative steps; a first step (102) of determining a user equipment with the lowest capacity, and a second step (103) of determining a resource area within which a spectral efficiency of the user equipment is optimal, and a step (104) of allocating a certain number of resources to the user equipment within the resource area, and a step (105) of updating the capacities associated to the different user equipment.

**Claims**

1. A method for allocating resources to user equipments connected to a base station of a cellular network, the resources are used to establish connection between the base station and the user equipments, the resources are associated to different resource areas and each resource area has a predetermined number of resources, the method comprising an initial step (101) of associating to each user equipment an initial capacity in bits per second of its communication service channel to the cellular network, the method also comprising the following iterative steps; a first step (102) of determining a user equipment with the lowest capacity, and a second step (103) of determining a resource area within which a spectral efficiency of the user equipment is optimal, and a step (104) of allocating a certain number of resources to the user equipment within the resource area, and a step (105) of updating the capacities associated to the different user equipments.

2. The method according to claim 1 wherein; the iterative steps are realized until the number of allocated resources associated to each resource area reaches the predetermined number of resources.

3. The method according to claim 2 wherein; the second determination step (103) is also configured to determine a resource area within which a spectral efficiency of the user equipment is optimal and that still contains available resources.

4. The method according to any of the previous claims wherein; the first determination step (102) is also configured to determine a user equipment with the lowest capacity and with a resource area within which the spectral efficiency is optimal and that still contains available resources.

5. The method according to any of the previous claims wherein; the step (105) of updating the capacities associated to the different user equipment is configured to use the following formula:

$$C_i = \sum_{j=1} R_{i,j} E_{i,j}$$

wherein $C_i$ is the capacity associated to the user equipment $i$, $N$ is the number of resource areas, $R_{i,j}$ is the resource associated to the user equipment $i$ within the resource area $j$, $E_{i,j}$ is the spectral efficiency of the user equipment $i$ within the resource area $j$,

or

the step (105) of updating the capacities associated to the different user equipments is configured to use the following formula:

$$C_i = \sum_{j=1}^{N} R_{i,j} E_{i,j} + \frac{Y}{M}$$

wherein $C_i$ is the capacity associated to the user equipment $i$, $N$ is the number of resource areas, $R_{i,j}$ is the resource associated to the user equipment $i$ within the resource area $j$, $E_{i,j}$ is the spectral efficiency of the user equipment $i$ within the resource area $j$, $M$ is the total number of user equipments connected to the base station, $Y$ is the total number of resources that are currently available.

6. The method according to any of the previous claims wherein;
the initial step (101) of associating to each user equipment an initial capacity, is configured to associate a null capacity to each user equipment.

7. The method according to any of the previous claims wherein the second step (103) of determining a resource area is configured to use the following formula to determine the spectral efficiency of the user equipment:

$$C = B \log_2 \left( 1 + \frac{S}{N+I} \right)$$

where

- $C$ is the channel capacity in bits per second;
- $B$ is the bandwidth of the channel in hertz
- $S$ is the average received useful signal power over the bandwidth measured in watts;
- $N$ is the average noise power over the bandwidth, measured in watts;
- $I$ is the average received interfering signal power over the bandwidth measured in watts;
- And $S/(N+I)$ is the signal-to-noise+interferer ratio expressed as a linear power ratio.

8. The method according to any of the previous claims wherein the resources areas are a group of time sub frames, and/or a group of frequency Ressource Blocks, and/or a group of MIMO transmission patterns and/or any combination of those elements.

9. An equipment for allocating resources to user equipments connected to a base station of a cellular network, the resources being used to establish a connection between the base station and the user equipments, the resources are associated to different resource areas and each resource areas has a predetermined number of resources,
the equipment comprising:

an initial module (601) configured to associate to each user equipment an initial capacity in bits per second of its communication service channel to the cellular network,
a first module (602) configured to determine a user equipment with the lowest capacity, and
a second module (603) configured to determine a resource area within which a spectral efficiency of the user equipment is optimal, and
a module (604) configured to allocate a certain number of resources to the user equipment within the resource area, and
a module (605) configured to update the capacities associated to the different user equipments.

10. A computer-readable medium having embodied thereon a computer program configured to carry out, when executed, allocation of resources to user equipments connected to a base station of a cellular network, the resources being used to establish connections between the base station and the user equipments, the resources being associated to different resource areas and each resource area having a predetermined number of resources, the computer program containing code to, when executed, perform an initial step (101) of associating to each user equipment an initial capacity in bits per second of its communication service channel to the cellular network, and further iteratively perform:

a first step (102) of determining a user equipment with the lowest capacity, and
a second step (103) of determining a resource area within which a spectral efficiency of the user equipment is optimal, and
a step (104) of allocating a certain number of resources to the user equipment within the resource area, and
a step (105) of updating the capacities associated to the different user equipments.

**Patentansprüche**

1. Verfahren für das Zuweisen von Ressourcen an Benutzergeräte, die mit einer Basisstation eines zellularen Netzes verbunden sind, wobei die Ressourcen zum Herstellen einer Verbindung zwischen der Basisstation und den Benutzergeräten benutzt werden, wobei die Ressourcen mit verschiedenen Ressourcenbereichen assoziiert sind und jeder Ressourcenbereich eine vorbestimmte Anzahl von Ressourcen hat, wobei das Verfahren umfasst:

einen Anfangsschritt (101) des Assoziierens eines jeden Benutzergeräts mit einer Anfangskapazität in Bits pro Sekunde seines Kommunikationsdienstkanals zum zellularen Netz, wobei das Verfahren weiterhin die folgenden iterativen Schritte umfasst:

einen ersten Schritt (102) des Bestimmens eines Benutzergeräts mit der niedrigsten Kapazität,

einen zweiten Schritt (103) des Bestimmens eines Ressourcenbereichs, in dem eine Spektraleffizienz des Benutzergeräts optimal ist,

einen Schritt (104) des Zuweisens einer bestimmten Zahl von Ressourcen an das Benutzergerät innerhalb des Ressourcenbereichs, und

einen Schritt (105) des Aktualisierens der Kapazitäten, die mit den verschiedenen Benutzergeräten assoziiert sind.

2. Verfahren nach Anspruch 1, wobei:

die iterativen Schritte ausgeführt werden, bis die Anzahl der zugewiesenen Ressourcen, die mit einem jeden Ressourcenbereich assoziiert sind, eine vorbestimmte Anzahl von Ressourcen erreicht.

3. Verfahren nach Anspruch 2, wobei:

der zweite Bestimmungsschritt (103) weiterhin konfiguriert ist für das Bestimmen eines Ressourcenbereichs, innerhalb dessen eine Spektraleffizienz des Benutzergeräts optimal ist und der noch verfügbare Ressourcen enthält.

4. Das Verfahren nach einem beliebigen der vorstehenden Ansprüche, wobei:

der erste Bestimmungsschritt (102) weiterhin konfiguriert ist für das Bestimmen eines Benutzergeräts mit der niedrigsten Kapazität und mit einem Ressourcenbereich, innerhalb dessen eine Spektraleffizienz optimal ist und der noch verfügbare Ressourcen enthält.

5. Das Verfahren nach einem beliebigen der vorstehenden Ansprüche, wobei:

der Schritt (105) des Aktualisierens der Kapazitäten, die mit den verschiedenen Benutzergeräten assoziiert sind, für die Verwendung der folgenden Formel konfiguriert ist:

$$C_i = \sum_{j=1} R_{i,j} E_{i,j}$$

wobei $C_i$ die mit dem Benutzergerät $i$ assoziierte Kapazität ist, N die Anzahl der Ressourcenbereiche, $R_{i,j}$ die Ressource, die mit einem Benutzergerät i innerhalb des Ressourcenbereichs j assoziiert ist, und $E_{i,j}$ die Spektraleffizienz des Benutzergeräts i innerhalb des Ressourcenbereichs j, oder wobei

der Schritt (105) des Aktualisierens der Kapazitäten, die mit den verschiedenen Benutzergeräten assoziiert sind, für die Verwendung der folgenden Formel konfiguriert ist:

$$C_i = \sum_{j=1}^{\dot{N}} R_{i,j} E_{i,j} + \frac{Y}{M}$$

wobei $C_i$ die mit dem Benutzergerät assoziiert Kapazität ist, N die Anzahl der Ressourcenbereiche, $R_{i,j}$ die Ressource, die mit einem Benutzergerät i innerhalb des Ressourcenbereichs j assoziiert ist, $E_{i,j}$ die Spektraleffizienz des Benutzergeräts i innerhalb des Ressourcenbereichs j, M die Gesamtanzahl von Benutzergeräten, die mit der Basisstation verbunden sind und Y die Gesamtanzahl aktuell verfügbarer Ressourcen.

6. Das Verfahren nach einem beliebigen der vorstehenden Ansprüche, wobei:

der Anfangsschritt (101) des Assoziierens einer Anfangskapazität mit jedem Benutzergerät konfiguriert ist für das Assoziieren einer Null-Kapazität zu jedem Benutzergerät.

7. Das Verfahren nach einem jeglichen der vorgenannten Ansprüche, wobei der zweite Schritt (103) des Bestimmens eines Ressourcenbereichs konfiguriert ist für die Benutzung der folgenden Formel zum Bestimmen der Spektraleffizienz des Benutzergeräts:

$$C = B \log_2\left(1 + \frac{S}{N+I}\right)$$

wobei

- $C$ die Kanalkapazität in Bits pro Sekunde ist;
- $B$ die Kanalbandbreite in Hertz ist;
- $S$ der Durchschnitt empfangener brauchbarer Signalstärke über die Bandbreite gemessen in Watt ist;
- $N$ der Durchschnitt der über die Bandbreite gemessen Rauschleistung in Watt ist;
- *I* der Durchschnitt empfangener Störsignalleistung über die Bandbreite gemessen in Watt ist;
- und S/(*N* + *I*) das Signal-Rausch-Verhältnis+Störabstand ist.

8. Das Verfahren nach einem jeglichen der vorgenannten Ansprüche, wobei die Ressourcenbereiche eine Gruppe von Unterrahmen und/oder eine Gruppe von Frequenzressourcenblöcken und/oder eine Gruppe von MIMO-Übertragungsmustern und/oder jede mögliche Kombination der genannten Elemente sind.

9. Gerät für das Zuweisen von Ressourcen an Benutzergeräte, die mit einer Basisstation eines Zellularen Netzes verbunden sind, wobei die Ressourcen zum Herstellen einer Verbindung zwischen der Basisstation und den Benutzergeräten benutzt werden, wobei die Ressourcen mit verschiedenen Ressourcenbereichen assoziiert sind und jeder Ressourcenbereich eine vorbestimmte Anzahl von Ressourcen hat, wobei das Gerät umfasst:

ein Anfangsmodul (601), das konfiguriert ist für das Assoziieren eines jeden Benutzergeräts mit einer Anfangskapazität in Bits pro Sekunde seines Kommunikationsdienstkanals zum zellularen Netz,
ein erstes Modul (602), das konfiguriert ist für das Bestimmen eines Benutzergeräts mit der niedrigsten Kapazität,
ein zweites Modul (603), das konfiguriert ist für das Bestimmen eines Ressourcenbereichs, innerhalb dessen eine Spektraleffizienz des Benutzergeräts optimal ist,
ein Modul (604), das konfiguriert ist für das Zuweisen einer bestimmten Zahl von Ressourcen an das Benutzergerät innerhalb des Ressourcenbereichs, und
ein Modul (605) das konfiguriert ist für das Aktualisieren der Kapazitäten, die mit den verschiedenen Benutzergeräten assoziiert sind.

10. Computerlesbares Medium, auf dem ein Computerprogramm installiert ist, das dafür konfiguriert ist, um dann, wenn es ausgeführt wird, die Zuweisung von Ressourcen zu Benutzergeräten auszuführen, die mit einer Basisstation eines zellularen Netzes verbunden sind, wobei die Ressourcen dazu benutzt werden, um Verbindungen zwischen der Basisstation und den Benutzergeräten herzustellen, wobei die Ressourcen mit verschiedenen Ressourcenbereichen assoziiert sind und jeder Ressourcenbereich eine vorbestimmte Anzahl von Ressourcen hat, wobei das Computerprogramm Programmierungen umfasst, um dann, wenn es ausgeführt wird, einen Anfangsschritt (101) des Assoziierens eines jeden Benutzergeräts mit einer Anfangskapazität in Bits pro Sekunde seines Kommunikationsdienstkanals zum zellularen Netz auszuführen, um dann iterativ die folgenden Schritte auszuführen:

einen ersten Schritt (102) des Bestimmens eines Benutzergeräts mit der niedrigsten Kapazität,
einen zweiten Schritt (103) des Bestimmens eines Ressourcenbereichs, innerhalb dessen eine Spektraleffizienz des Benutzergeräts optimal ist,
einen Schritt (104) des Zuweisens einer bestimmten Zahl von Ressourcen an das Benutzergerät innerhalb des Ressourcenbereichs, und
einen Schritt (105) des Aktualisierens der Kapazitäten, die mit den verschiedenen Benutzergeräten assoziiert sind.

## Revendications

1. Procédé d'allocation de ressources à des équipements utilisateur connectés à une station de base d'un réseau cellulaire, dans lequel les ressources sont utilisées pour établir une connexion entre la station de base et les équipements utilisateur, les ressources sont associées à différentes zones de ressources et chaque zone de ressources dispose d'un nombre de ressources prédéterminé, le procédé comprenant :

une étape initiale (101) d'association à chaque équipement utilisateur d'une capacité initiale en bits par seconde pour son canal de service de communication vers le réseau cellulaire, le procédé comprenant également les étapes itératives suivantes :

une première étape (102) de détermination d'un équipement utilisateur ayant la capacité la plus faible, et
une deuxième étape (103) de détermination d'une zone de ressources dans laquelle l'efficacité d'utilisation du spectre de l'équipement utilisateur est optimale, et
une étape (104) d'allocation d'un certain nombre de ressources à l'équipement utilisateur dans la zone de ressources, et
une étape (105) de mise à jour des capacités associées aux différents équipements utilisateur.

2. Procédé selon la revendication 1, dans lequel :

les étapes itératives sont réalisées jusqu'à ce que le nombre de ressources allouées associées à chaque zone de ressources atteigne le nombre de ressources prédéterminé.

**3.** Procédé selon la revendication 2, dans lequel :

la deuxième étape de détermination (103) est également configurée pour déterminer une zone de ressources dans laquelle l'efficacité d'utilisation du spectre de l'équipement utilisateur est optimale et qui contient encore des ressources disponibles.

**4.** Procédé selon l'une quelconque des revendications précédentes, dans lequel :

la première étape de détermination (102) est également configurée pour déterminer un équipement utilisateur ayant la capacité la plus faible et ayant une zone de ressources dans laquelle l'efficacité d'utilisation du spectre est optimale et qui contient encore des ressources disponibles.

**5.** Procédé selon l'une quelconque des revendications précédentes, dans lequel :

l'étape (105) de mise à jour des capacités associées aux différents équipements utilisateur est configurée pour utiliser la formule suivante :

$$C_i = \sum_{j=1} R_{i,j} E_{i,j}$$

dans laquelle $C_i$ est la capacité associée à l'équipement utilisateur $i$, $N$ est le nombre de zones de ressources, $R_{i,j}$ est la ressource associée à l'équipement utilisateur $i$ dans la zone de ressources $j$, $E_{i,j}$ est l'efficacité d'utilisation du spectre de l'équipement utilisateur $i$ dans la zone de ressources $j$,
ou
l'étape (105) de mise à jour des capacités associées aux différents équipements utilisateur est configurée pour utiliser la formule suivante :

$$C_i = \sum_{j=1} R_{i,j} E_{i,j} + \frac{Y}{M}$$

dans laquelle $C_i$ est la capacité associée à l'équipement utilisateur $i$, $N$ est le nombre de zones de ressources, $R_{i,j}$ est la ressource associée à l'équipement utilisateur $i$ dans la zone de ressources $j$, $E_{i,j}$ est l'efficacité d'utilisation du spectre de l'équipement utilisateur $i$ dans la zone de ressources $j$, $M$ est le nombre total d'équipements utilisateur connectés à la station de base,

$Y$ est le nombre total de ressources qui sont actuellement disponibles.

**6.** Procédé selon l'une quelconque des revendications précédentes, dans lequel :

l'étape initiale (101) d'association à chaque équipement utilisateur d'une capacité initiale est configurée pour associer une capacité nulle à chaque équipement utilisateur.

**7.** Procédé selon l'une quelconque des revendications précédentes, dans lequel la deuxième étape (103) de détermination d'une zone de ressources est configurée pour utiliser la formule suivante pour déterminer l'efficacité d'utilisation du spectre de l'équipement utilisateur :

$$C = B \log_2 \left( 1 + \frac{S}{N+I} \right)$$

où

- $C$ est la capacité du canal en bits par seconde ;
- $B$ est la bande passante du canal en hertz ;
- $S$ est la puissance moyenne du signal utile reçu sur la bande passante, mesurée en watts ;
- $N$ est la puissance moyenne du bruit sur la bande passante, mesurée en watts ;
- $I$ est la puissance moyenne du signal d'interférence reçu sur la bande passante, mesurée en watts ; et
- $S/(N+I)$ est le rapport signal sur bruit + interférence exprimé sous forme de rapport de puissance linéaire.

**8.** Procédé selon l'une quelconque des revendications précédentes dans lequel les zones de ressources sont un groupe de sous-intervalles temporels, et/ou un groupe de blocs de ressource de fréquence, et/ou un groupe de schémas de transmission MIMO et/ou toute combinaison de ces éléments.

**9.** Équipement destiné à allouer des ressources à des équipements utilisateur connectés à une station de base d'un réseau cellulaire, dans lequel les ressources sont utilisées pour établir une connexion entre la station de base et les équipements utilisateur, les ressources sont associées à différentes zones de ressources et chaque zone de ressources dispose d'un nombre de ressources prédéterminé, l'équipement comprenant :

un module initial (601) configuré pour associer à chaque équipement utilisateur une capacité initiale en bits par seconde pour son canal de service de communication vers le réseau cellulaire,

un premier module (602) configuré pour déterminer un équipement utilisateur ayant la capacité la plus faible, et

un deuxième module (603) configuré pour déterminer une zone de ressources dans laquelle l'efficacité d'utilisation du spectre de l'équipement utilisateur est optimale, et

un module (604) configuré pour allouer un certain nombre de ressources à l'équipement utilisateur dans la zone de ressources, et

un module (605) configuré pour mettre à jour les capacités associées aux différents équipements utilisateur.

10. Support pouvant être lu par un ordinateur sur lequel est incorporé un programme informatique configuré pour réaliser, lorsqu'il est exécuté, une allocation de ressources aux équipements utilisateur connectés à une station de base d'un réseau cellulaire, les ressources étant utilisées pour établir des connexions entre la station de base et les équipements utilisateur, les ressources étant associées à différentes zones de ressources et chaque ressource disposant d'un nombre de ressources prédéterminé, le programme informatique contenant du code pour, lorsqu'il est exécuté, réaliser une étape initiale (101) d'association à chaque équipement utilisateur d'une capacité initiale en bits par seconde pour son canal de service de communication vers le réseau cellulaire,

et réaliser en outre de façon itérative :

une première étape (102) de détermination d'un équipement utilisateur ayant la capacité la plus faible, et

une deuxième étape (103) de détermination d'une zone de ressources dans laquelle l'efficacité d'utilisation du spectre de l'équipement utilisateur est optimale, et

une étape (104) d'allocation d'un certain nombre de ressources à l'équipement utilisateur dans la zone de ressources, et

une étape (105) de mise à jour des capacités associées aux différents équipements utilisateur.

101 — Initial step of association

102 — Determination UE with lowest capacity

103 — Determination ressource area with spectal efficiency optimal

104 — Allocation of ressource to the UE

105 — Updating capacities of the UEs

# Fig. 1

BH

M  Marco Cell (incl. BB processing)

S  Small cell (eNB)

C  Coordinator (X2 Proxy)

S  scheduler

In this scenario, the Coordinator provides to each scheduler its own "working enveloppe" within which it operates

This is the scenario operational for the short term (e.g. X2 based)

# Fig. 2

**Fig. 3**

**Fig. 4a**

| UE | eNB | Coordinator |
|---|---|---|

CQI measurements → UE grouping / Measurement filtering → Measurement reception, depollution & storage during CollectTime

⇩

Subband reception / Validity for next ExecTime ← Itative optimal serarch every CollectTime

⇩

CQI measurements → At each TTI scheduler allocates PRBs withing the subbands using frequency selective scheduling
DCI grants ←

**Fig. 4b**

Fig. 5

601 — Module of initialisation

602 — Module of determination UE with lowest capacity

603 — Module of determination ressource area with spectal efficiency optimal

604 — Module of allocation of ressource to the UE

605 — Module of updating capacities of the UEs

Fig. 6

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012163208 A

- US 2011116460 A